# EUROPEAN PATENT SPECIFICATION

(11) **EP 4 206 544 B1**
(45) Date of publication and mention of the grant of the patent: **02.04.2025**
(21) Application number: 22216987.2
(22) Date of filing: 28.12.2022
(51) Int. Cl.: F24C 15/00, F21W 131/307, G02B 6/00, F21V 8/00

(54) **OVEN MUFFLE PROVIDED WITH A LIGHTING DEVICE FOR ILLUMINATING THE COOKING CHAMBER**
OFENMUFFEL MIT EINER BELEUCHTUNGSVORRICHTUNG ZUR BELEUCHTUNG DES GARRAUMS
MOUFLE DE FOUR MUNI D'UN DISPOSITIF D'ÉCLAIRAGE POUR ÉCLAIRER LA CHAMBRE DE CUISSON

(30) Priority: 29.12.2021 IT 202100032924
(43) Date of publication of application: 05.07.2023
(73) Proprietor: SMEG S.p.A., 42016 Guastalla (RE) (IT)
(72) Inventor: MASTILOVIC, Nebojsa, 42016 Guastalla (RE) (IT); RASCHI, Lorenzo, 42016 Guastalla (RE) (IT)
(74) Representative: Studio Torta S.p.A.

(56) References cited:
- EP-A1- 2 336 644
- EP-A1- 3 193 085
- EP-A1- 3 376 116
- WO-A1-2018/121924
- CN-A- 108 980 917
- CN-U- 203 585 941
- DE-A1- 102014 203 532
- DE-A1- 102020 204 047
- DE-B3- 102011 111 065

## Description

### Technical field

The present invention relates to an oven muffle. Therefore, the technical field of reference for the present invention is that of ovens (domestic and industrial) for cooking or heating foods. In more detail, the technical field of the present invention relates to oven muffles provided with lighting devices capable of illuminating the cooking chamber so that a user can easily check the state of cooking or heating of foods. The technical field of the present invention is not limited by a particular type of cooking of foods. In this sense, an oven according to the present invention can be an electric oven, a gas oven, a steam oven or oven with humidifier, a microwave oven or a hybrid oven with various cooking modes.

### Background

As is known, domestic or industrial ovens for cooking or heating foods comprise a particular inner structure known in the field as muffle which defines the cooking chamber. An outer frame is present outside the muffle and between the muffle and this outer frame a cavity is provided to house the devices required for correct operation of the oven. The muffle comprises a plurality of walls, interconnected or produced directly in one piece. In particular, the muffle comprises a back wall, a roof wall, a floor wall and two side walls. A front door is then added to this structure. As is known, the door is movable (usually hinged to a side wall) between a first position in which it closes the cooking chamber to reduce dissipation of the cooking heat and a second position in which it allows the user to access the cooking chamber.

Starting from this known structure, the market currently offers muffles provided with lighting devices configured to illuminate the cooking chamber so that a user can easily check the state of cooking or heating of foods. A first example of these muffles provides for the presence of a single light source at the roof of the cooking chamber, also known as spot light. Obviously, this solution is not optimal when the oven is of the type with shelves, as in the case of multi-level cooking the light coming from the roof is unable to illuminate foods placed on the various shelves. The present invention does not refer to this type of lighting device, but rather to lighting devices configured so as to be able to illuminate all the shelves present in the oven.

A first known solution of this type is, for example, described in DE102006061793. In fact, this document describes a muffle in which for each shelf a dedicated light source is provided, in the form of a horizontal light guide supported by a specific support constrained to the lateral wall of the cooking chamber. However, this solution is not particularly advantageous in view of the large number of components used for illumination.

A second example of this type of illuminated muffle is described in EP2746676. According to the teachings of this document, a single vertical light guide can be provided, constrained to a side wall of the muffle and extending from the floor to the roof wall of the cooking chamber. Advantageously, this vertical light guide extends for the whole of the height of the cooking chamber and therefore with a single light source (for example an LED) arranged outside the cooking chamber it is possible to illuminate all of the shelves present in the oven. According to EP2746676, the vertical light guide is supported, at the side walls, by a specific support provided with reflective elements or can be supported by a specific vertical recess obtained in the side wall of the muffle directly housing the light guide.

EP2746676 also addresses the problem of correctly conveying the light emitted by the vertical light guide and of preventing glare for the user. The solution proposed in this document is to produce particular surface finishes on some portions of the vertical light guide so as to allow the emission of light at these portions with surface finish. Although the solution described in EP2746676 effectively reduces the devices present in the muffle for illumination of the cooking chamber it is not without drawbacks. For example, the partial shielding surface finish of the light guide makes this solution costly and moreover the light guide is directly exposed to the cooking chamber and is thus subject to impacts and can easily come into direct contact with agents present in the cooking chamber.

Examples of muffles are described in DE102020204047, EP3193085, WO2018121924, EP3376116, CN108980917, DE102014203532, EP2336644, DE102011111065 and CN203585941U.

### Description of the invention

Starting from this prior art, an object of the present invention is therefore to produce an oven muffle provided with an innovative lighting device of the cooking chamber capable of overcoming the drawbacks cited above relating to the prior art. In particular, the principal object of the present invention is to produce a muffle provided with lighting devices in which it is possible to illuminate all the shelves present in the oven (if present) with a few simple components and at the same time solve the problems of glare and protection of the vertical light guide.

In accordance with these objects, the present invention relates to an innovative oven muffle, wherein said muffle defines a substantially box shaped cooking chamber with a front opening (as known). The cooking chamber thus comprises:
- a back wall (opposite the opening), a roof wall, a floor wall, two side walls (and optionally a door hinged to a side wall at the opening);
- at least one vertical lighting device configured to illuminate the whole of the cooking chamber with a diffused light, also at all of the shelves, if present;

As is known, a shelf is a supporting surface parallel to the floor wall for dividing the cooking chamber into sub-chambers.

Starting from this known configuration, the principal aspect of the present invention is to provide an innovative lighting device comprising:
- a vertical light guide extending from the floor wall to beyond the roof wall (hence vertically with a portion in the cooking chamber from the floor wall to the roof wall and an external portion beyond the roof wall);
- an LED source (preferably provided with a heatsink, for example with fins) coupled to the end of the light guide outside the cooking chamber and housed in a cavity of the oven;

wherein the light guide inside the cooking chamber is arranged at a side wall so as not to occupy the cooking chamber;
wherein the lighting device further comprises a vertical support in the form of a shell made of silicone material which embraces part of the faces of the light guide along the whole of its extension within the cooking chamber. The shape of the silicone shell and of the light guide are such that the light emitted towards the outside of the cooking chamber is shielded (so as to prevent glare) and only a portion of the light guide facing the inside of the cooking chamber (obviously only a vertical face thereof) is exposed (not covered by the silicone shell) to allow diffused lighting of the cooking chamber. In detail, at the side of the light guide not covered by the silicone shell the light exits and illuminates the cooking chamber in a diffused manner through a white silk screen printing produced on the glass surface of the light guide.

As the shell is made of silicone material, the present invention offers multiple advantages. Besides preventing glare for the user, (shielding function), the lighting device inside the cooking chamber is easy to clean, does not overheat in high temperature environments, the light guide is optimally protected from impacts and is also capable of absorbing any expansions without generating mechanical stress.

Preferably, the vertical wall comprises a recess, i.e., a portion extending vertically, convex towards the outside of the cooking chamber, in which the lighting device is housed. In this way, there is a further glare barrier and the whole of the volume of the cooking chamber is available.

Preferably, the housing recess is obtained at the opening of the cooking chamber in a position opposite the back wall. Preferably, in this embodiment the shell does not protrude beyond the recess towards the cooking chamber, i.e., observing the cooking chamber from the front, it is completely inside the recess.

The silicone shell can be produced in any shape providing it is capable of performing the aforesaid dual function of protecting the light guide and of shield configured to allow light to be emitted only towards the inside of the cooking chamber. The accompanying figures describe a particularly advantageous embodiment of the invention.

Preferably, the light guide and the silicone shell are cylindrical or tubular, i.e., with vertical parallel generatrices. Preferably, the light guide is a rectangular section (section obtained on a plane parallel to the floor of the cooking chamber) while the support has a quadrilateral shaped section comprising:
- a first side or edge coupled to the side wall, or to the wall of the recess;
- a second side or edge that starting from a first end of the first side close to the opening of the cooking chamber extends towards the inside of the cooking chamber;

- a third side or edge extending from a second end of the first side towards the inside of the cooking chamber; wherein the third side extends towards the inside of the cooking chamber less than the second side, i.e., it remains closer to the recess;
- a fourth side or edge joining the second and the third facing the cooking chamber.

In this embodiment, the seat that houses the light guide in the silicone shell is a vertical groove obtained at the fourth side. Therefore, the light is emitted from the light guide at this fourth side through a white silk screen printing produced on the glass surface of said light guide.

In this way the coupling between the light guide and the seat of the silicone shell is of prismatic type and occurs by translation of the light guide into the seat along the vertical direction. Finally, the seat is shaped to prevent the light guide from coming out of the support into the cooking chamber.

Preferably, the fourth side is inclined towards the back wall of the cooking chamber (not orthogonal to the side wall) so that the second and the fourth side form a sort of triangle.

Finally, the muffle can comprise two lighting devices, i.e., one for each side wall. The lighting generated by these two devices can be identical or different.

Finally, although evident and known, for the avoidance of doubt, it is indicated that vertical direction is meant as the direction orthogonal to the floor wall of the cooking chamber.

### Brief description of the figures

Further features and advantages of the present invention will be clear from the following description of a non-limiting example of embodiment thereof, with reference to the figures of the accompanying drawings, wherein:
Fig. 1 is a schematic view of an embodiment of a muffle according to the present invention;
Fig. 2 is an enlarged view of the detail II of Fig. 1;
Fig. 3 is an enlarged view of a component of Fig. 2;
Fig. 4 is a sectional view of the muffle of Fig. 1;
Fig. 5 is an enlarged view of the detail V of Fig. 1.

### Description of an embodiment of the invention

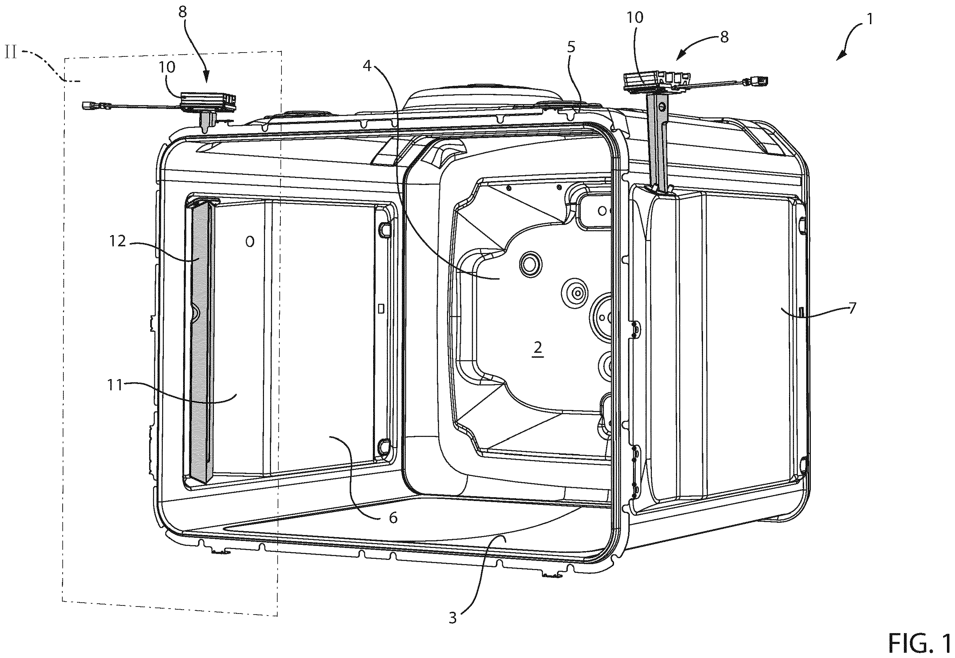

With reference to the accompanying figures, Fig. 1 shows a schematic view of an oven muffle 1 according to the present invention. As is known, the muffle 1 defines a cooking chamber 2 and comprises a plurality of walls. In particular, a floor wall 3, a back wall 4, a roof wall 5 and two side walls 6 and 7 are visible in Fig. 1. The muffle 1 further comprises a door (not shown and usually hinged to a side wall) for selectively closing and opening the cooking chamber 2 relative to the surrounding environment. The oven that incorporates the muffle 1 comprises, in a known manner, an outer frame (not shown) that surrounds the muffle 1 and the devices required for correct operation of the oven are housed in the cavity present between muffle 1 and frame. As the present invention is not dependent on the type of cooking provided by the oven, in Fig. 1 the heating devices and the outer frame that covers the muffle have been purposely omitted. The reference 8 in Fig. 1 indicates two vertically extending lighting devices arranged at recesses 11 obtained in the side walls 6 and 7. These lighting devices 8 have a portion that extends from the floor 3 to the roof 5 and a portion that extends beyond the roof 5 ending in the aforesaid cavity. These devices 8 are of LED type and the LED of each device is housed at the end outside the cooking chamber. The reference 10 in Fig. 1 indicates a heat dissipation device with fins below which the LED is arranged. The reference 12 indicates the portion of the device 8 present in the cooking chamber. Greater details emerge in the following figures.

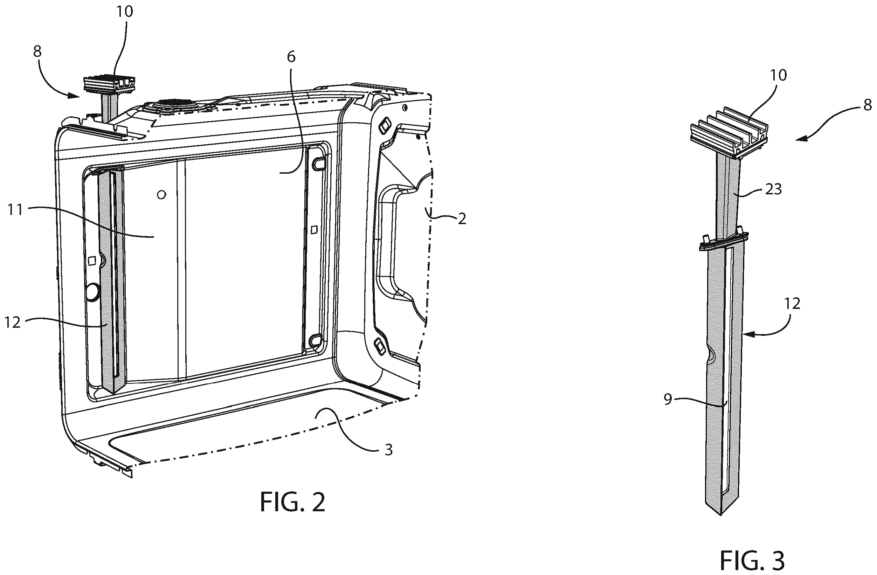

Fig. 2 is an enlarged view of the detail II of Fig. 1 and allows a greater appreciation of the extension of the device 8 inside and outside the cooking chamber.

Fig. 3 is an enlarged view of a component of Fig. 2, i.e., only of the lighting device 8. In this example, the lighting device 8 comprises a vertical light guide 9 that starts from the LED below the fins 10 and ends at the floor 3. In the portion inside the cooking chamber the light guide is housed in a silicone shell 12, in particular in a vertical groove or seat obtained in a face of the silicone shell 12. The reference 23 indicates a covering of the part of the light guide outside the cooking chamber. The two coverings are different as requirements are obviously different.

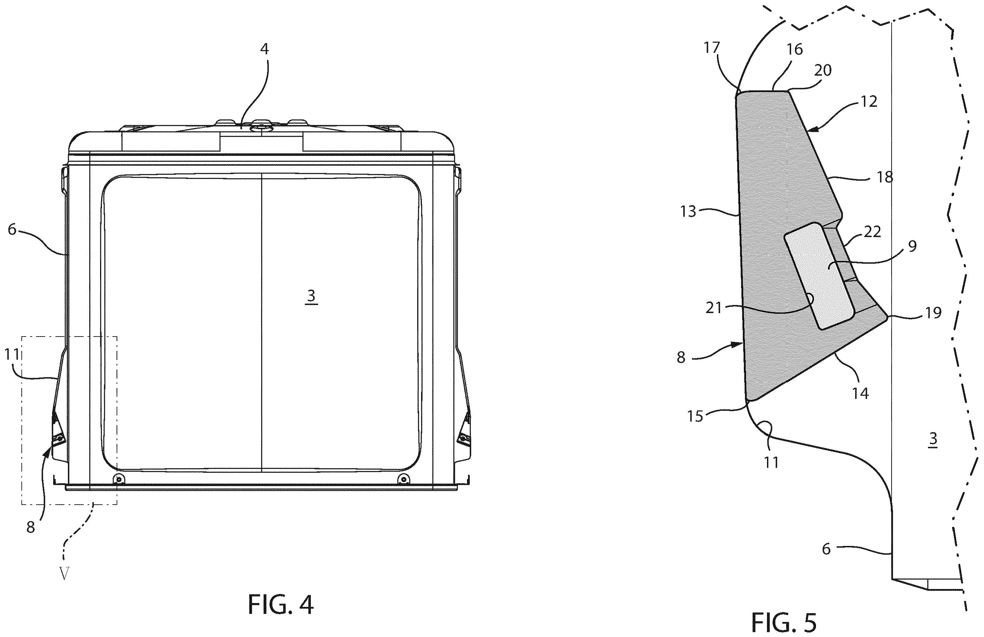

Fig. 4 is a sectional view of the muffle of Fig. 1, in particular in a section obtained at half height in a plane parallel to the floor 3. In this example, it can be noted how the silicone shell 12 does not protrude beyond the recess 11 towards the cooking chamber.

Fig. 5 is an enlarged view of the detail V of Fig. 1. According to this example, the section of the silicone shell 12 is a quadrilateral and comprises:
- a first side 13 coupled to the side wall 6;
- a second side 14 which, starting from a first end 15 of the first side 13 close to the opening of the cooking chamber, extends towards the inside of the cooking chamber;
- a third side 16 extending from a second end 17 of the first side 13 towards the inside of the cooking chamber
- a fourth side 18 joining the inner ends 19, 20 to the cooking chamber of the second 14 and of the third side 16.

In this figure, the third side 16 extends less towards the inside of the cooking chamber than the second side 14 and the fourth side 14 is inclined towards the back wall 4 of the cooking chamber 2. The seat 22 for the light guide is therefore a vertical groove obtained in the fourth side 18. Therefore, as cited above, the light generated by the LED runs in the light guide and exits therefrom at the fourth side of the shell through a white silk screen printing produced on the glass surface of said light guide.

Finally, it is evident that modifications and variants can be made to the invention described herein without departing from the scope of the invention as defined in the appended claims.

## Claims

1. An oven muffle (1) defining a cooking chamber (2) with a front opening, wherein the muffle (1) comprises:
- a back wall (4), a roof wall (5), a floor wall (3) and two side walls (6, 7);
- at least one lighting device (8) configured to illuminate the cooking chamber (2);
wherein the lighting device (8) comprises:
- a vertical light guide (9) having a first portion inside the cooking chamber (2) extending at a side wall (6) from the floor wall (3) to the roof wall (5) and a second portion outside the cooking chamber (2) beyond the roof wall (5);
**characterised in that** the lighting device (8) further comprises
- a LED source (10) coupled to the end of the light guide outside the cooking chamber; and
- a vertical support (12) in the form of a shell made of silicone material which partially embraces the light guide (9) along the whole of its extension within the cooking chamber (2).

2. Muffle as claimed in claim 1, wherein the silicone shell (12) is configured to shield the light emitted from the lighting device (8) towards the opening of the cooking chamber (2) while leaving exposed only a portion of the light guide facing the cooking chamber.

3. Muffle as claimed in claim 2, wherein the side wall (6) comprises a recess (11) for housing the lighting device (8) wherein the recess (11) is obtained substantially at the cooking chamber opening (2) opposite the back wall.

4. Muffle as claimed in claim 3, wherein the lighting device (8) does not protrude into the cooking chamber (2) beyond the recess (11).

5. Muffle as claimed in any one of the preceding claims, wherein the light guide (9) and the silicone shell (12) are tubular bodies.

6. Muffle as claimed in claim 5, wherein in a section formed in a plane parallel to the bottom wall of the muffle the silicone shell (12) has a quadrilateral shape.

7. Muffle as claimed in claim 6, wherein the quadrilateral section of the silicone shell (12) comprises:
- a first side (13) coupled to the side wall (6);
- a second side (14) which, starting from a first end (15) of the first side close to the opening of the cooking chamber, extends towards the inside of the cooking chamber;
- a third side (16) extending from a second end (17) of the first side towards the interior of the cooking chamber; wherein the third side (16) extends less towards the interior of the cooking chamber than the second side (14);
- a fourth side (18) joining the inner ends (19, 20) to the cooking chamber of the second (14) and third sides (16).

8. Muffle as claimed in claim 7, wherein the fourth side (14) is inclined towards the back wall (4) of the cooking chamber (2).

9. Muffle as claimed in claim 8, wherein the light guide (9) is housed in a vertical groove seat (21) formed in the silicone shell (12) at the fourth side (18).

10. Muffle as claimed in claim 9, wherein the coupling between the light guide (9) and the seat (21) of the silicone shell is of prismatic type and occurs by translation of the light guide into the seat (21) along the vertical direction.

## Patentansprüche

1. Ofenmuffel (1), die eine Garkammer (2) mit einer vorderen Öffnung definiert, wobei die Muffel (1) umfasst:
- eine Rückwand (4), eine Dachwand (5), eine Bodenwand (3) und zwei Seitenwände (6, 7);
- zumindest eine Beleuchtungsvorrichtung (8), die konfiguriert ist, die Garkammer (2) zu beleuchten;
wobei die Beleuchtungsvorrichtung (8) umfasst:
- einen vertikalen Lichtleiter (9), der einen ersten Abschnitt im Inneren der Garkammer (2), der sich an einer Seitenwand (6) von der Bodenwand (3) zu der Dachwand (5) erstreckt, und einen zweiten Abschnitt außerhalb der Garkammer (2) jenseits der Dachwand (5) aufweist;
**dadurch gekennzeichnet, dass** die Beleuchtungsvorrichtung (8) ferner umfasst:
- eine LED-Quelle (10), die mit dem Ende des Lichtleiters außerhalb der Garkammer gekoppelt ist; und
- eine vertikale Stütze bzw. einen vertikalen Träger (12) in der Form einer Hülle aus Silikonmaterial, die den Lichtleiter (9) entlang seiner gesamten Erstreckung innerhalb der Garkammer (2) teilweise umschließt.

2. Muffel nach Anspruch 1, wobei die Silikonhülle (12) konfiguriert ist, das von der Beleuchtungsvorrichtung (8) zu der Öffnung der Garkammer (2) emittierte Licht abzuschirmen und dabei nur einen Abschnitt bzw. Teil des Lichtleiters frei zu lassen, welcher der Garkammer zugewandt ist.

3. Muffel nach Anspruch 2, wobei die Seitenwand (6) eine Aussparung (11) zum Unterbringen der Beleuchtungsvorrichtung (8) aufweist, wobei die Aussparung (11) im Wesentlichen an der Garkammeröffnung (2) erhalten bzw. ausgebildet ist, die der Rückwand gegenüberliegt bzw. entgegengesetzt ist.

4. Muffel nach Anspruch 3, wobei die Beleuchtungsvorrichtung (8) nicht über die Aussparung (11) hinaus in die Garkammer (2) hineinragt.

5. Muffel nach einem der vorhergehenden Ansprüche, wobei der Lichtleiter (9) und die Silikonhülle (12) rohrförmige Körper sind.

6. Muffel nach Anspruch 5, wobei in einem Abschnitt gebildet in einer Ebene parallel zu der Bodenwand der Muffel die Silikonhülle (12) eine vierseitige bzw. viereckige Form aufweist.

7. Muffel nach Anspruch 6, wobei der viereckige Abschnitt der Silikonhülle (12) umfasst:
- eine erste Seite (13), die mit der Seitenwand (6) gekoppelt ist;
- eine zweite Seite (14), die ausgehend von einem ersten Ende (15) der ersten Seite nahe der Öffnung der Garkammer sich zu dem Inneren der Garkammer erstreckt;
- eine dritte Seite (16), die sich von einem zweiten Ende (17) der ersten Seite zu dem Inneren der Garkammer erstreckt; wobei sich die dritte Seite (16) weniger zu dem Inneren der Garkammer erstreckt als die zweite Seite (14);
- eine vierte Seite (18), welche die inneren Enden (19, 20) der zweiten (14) und dritten Seite (16) mit der Garkammer verbindet.

8. Muffel nach Anspruch 7, wobei die vierte Seite (14) zu der Rückwand (4) der Garkammer (2) geneigt ist.

9. Muffel nach Anspruch 8, wobei der Lichtleiter (9) in einem vertikalen Nutsitz (21) untergebracht ist, der in der Silikonhülle (12) an der vierten Seite (18) ausgebildet ist.

10. Muffel nach Anspruch 9, wobei die Kopplung zwischen dem Lichtleiter (9) und dem Sitz (21) der Silikonhülle von prismatischer Art ist und durch Translation bzw. Verschiebung des Lichtleiters in den Sitz (21) entlang der vertikalen Richtung auftritt.

## Revendications

1. Moufle de four (1) définissant une chambre de cuisson (2) avec une ouverture frontale, dans lequel le moufle (1) comprend :
- une paroi arrière (4), une paroi supérieure (5), une paroi de fond (3) et deux parois latérales (6, 7) ;
- au moins un dispositif d'éclairage (8) configuré pour éclairer la chambre de cuisson (2) ;
dans lequel le dispositif d'éclairage (8) comprend :
- un guide de lumière vertical (9) ayant une première partie à l'intérieur de la chambre de cuisson (2) s'étendant sur une paroi latérale (6) de la paroi de fond (3) à la paroi supérieure (5) et une seconde partie à l'extérieur de la chambre de cuisson (2) au-delà de la paroi supérieure (5) ;
**caractérisé en ce que** le dispositif d'éclairage (8) comprend en outre
- une source LED (10) couplée à l'extrémité du guide de lumière à l'extérieur de la chambre de cuisson ; et
- un support vertical (12) sous la forme d'une coque en matériau silicone qui englobe partiellement le guide de lumière (9) sur toute sa longueur à l'intérieur de la chambre de cuisson (2).

2. Moufle selon la revendication 1, dans lequel la coque en silicone (12) est configurée pour faire écran à la lumière émise par le dispositif d'éclairage (8) vers l'ouverture de la chambre de cuisson (2) tout en ne laissant exposée qu'une partie du guide de lumière faisant face à la chambre de cuisson.

3. Moufle selon la revendication 2, dans lequel la paroi latérale (6) comprend un renfoncement (11) pour loger le dispositif d'éclairage (8), le renfoncement (11) étant obtenu sensiblement au niveau de l'ouverture de la chambre de cuisson (2), à l'opposé de la paroi arrière.

4. Moufle selon la revendication 3, dans lequel le dispositif d'éclairage (8) ne fait pas saillie dans la chambre de cuisson (2) au-delà du renfoncement (11).

5. Moufle selon l'une quelconque des revendications précédentes, dans lequel le guide de lumière (9) et la coque en silicone (12) sont des corps tubulaires.

6. Moufle selon la revendication 5, dans lequel, dans une section formée dans un plan parallèle à la paroi de fond de la moufle, la coque en silicone (12) a une forme quadrilatérale.

7. Moufle selon la revendication 6, dans lequel la section quadrilatérale de la coque en silicone (12) comprend :
- un premier côté (13) couplé à la paroi latérale (6) ;
- un deuxième côté (14) qui, à partir d'une première extrémité (15) du premier côté proche de l'ouverture de la chambre de cuisson, s'étend vers l'intérieur de la chambre de cuisson ;
- un troisième côté (16) s'étendant depuis une deuxième extrémité (17) du premier côté vers l'intérieur de la chambre de cuisson ; le troisième côté (16) s'étendant moins vers l'intérieur de la chambre de cuisson que le deuxième côté (14) ;
- un quatrième côté (18) reliant les extrémités intérieures (19, 20) à la chambre de cuisson des deuxième (14) et troisième côtés (16).

8. Moufle selon la revendication 7, dans lequel le quatrième côté (14) est incliné vers la paroi arrière (4) de la chambre de cuisson (2).

9. Moufle selon la revendication 8, dans lequel le guide de lumière (9) est logé dans un siège de rainure vertical (21) formé dans la coque en silicone (12) au niveau du quatrième côté (18).

10. Moufle selon la revendication 9, dans lequel le couplage entre le guide de lumière (9) et le siège (21) de la coque en silicone est de type prismatique et se produit par translation du guide de lumière dans le siège (21) le long de la direction verticale.
